# EUROPÄISCHE PATENTSCHRIFT

(11) **EP 0 561 173 B1**
(45) Veröffentlichungstag und Bekanntmachung des Hinweises auf die Patenterteilung: **26.04.1995**
(21) Anmeldenummer: 93102634.8
(22) Anmeldetag: 18.02.1993
(51) Int. Cl.: B29C 49/04

(54) **Extrusionsblasmaschine zur Herstellung von Kunststoffhohlkörpern**
Apparatus for extrusion blow-moulding plastainers
Machine de soufflage par extrusion pour la fabrication de corps creux en matière plastique

(30) Priorität: 19.03.1992 DE 4208921
(43) Veröffentlichungstag der Anmeldung: 22.09.1993
(73) Patentinhaber: FISCHER, Rainer, D-34414 Warburg (DE)
(72) Erfinder: FISCHER, Rainer, D-34414 Warburg (DE)
(74) Vertreter: Prietsch, Reiner, Dipl.-Ing.

(56) Entgegenhaltungen:
- DE-A- 1 802 916
- DE-A- 2 256 684
- DE-A- 3 727 990

## Beschreibung

Die Erfindung betrifft eine Extrusionsblasmaschine zur Herstellung von Kunststoffhohlkörpern, mit einem Maschinenrahmen, der einen horizontal angeordneten Extruder trägt, über dessen Düsenkopf ein Schlauch an einer Stirnseite des Maschinenrahmens vertikal extrudierbar ist, sowie mit zwei an dieser Stirnseite des Maschinenrahmens symmetrisch beidseits und unterhalb des Düsenkopfes angeordneten geteilten Blasformen, deren jede eine Schließeinheit, eine Antriebseinheit zur horizontalen Verschiebung unter den Düsenkopf zum Übernehmen des extrudierten Schlauchstücks und je eine oberhalb der zugeordneten Blasform am Maschinenrahmen befestigten Blaspinole aufweist.

Eine derartige bekannte Extrusionsblasmaschine eignet sich zur Herstellung von Kunststoffhohlkörpern mit rotationssymmetrischem Querschnitt, also z.B. von Rundflaschen. Die beiden Blasformen sind als identische Endblasformen ausgebildet. Von ihren Ausgangsstellungen unter den betreffenden Blaspinolen werden sie mittels ihrer jeweiligen Antriebseinheit horizontal unter den Düsenkopf verschoben und übernehmen das von diesem extrudierte Schlauchstück, das dann nach dem Zurückfahren der betreffenden Blasform in ihre Ausgangsstellung mittels der zugeordneten Blaspinole zu dem fertigen Hohlkörper ausgeblasen wird, der nach dem Ablauf der Abkühlzeit ausgeworfen wird.

Aus der EP-PS 0 256 062 ist eine Extrusionsblasmaschine zur Herstellung von Flachflaschen bekannt, die zwei unterschiedliche Blasformen umfaßt, nämlich eine Zwischenblasform zur Herstellung eines Zwischenformlings mit rotationssymmetrischem Querschnitt und eine Endblasform, in der dieser Zwischenformling zur Flachflasche umgeformt wird. Auf diese Weise lassen sich Flachflaschen besonders materialsparend und mit zumindest über den größten Teil ihrer Höhe nahezu gleichförmiger Wandstärke herstellen. Nähere Ausführungen über den konstruktiven Aufbau der betreffenden Extrusionsblasmaschine sind jedoch der EP-PS 0 256 062 nicht zu entnehmen.

Mit der Extrusionsblasmaschine der einleitend angegebenen Gattung können solche Flachflaschen nicht hergestellt werden, da die Konstruktion keine Übergabe oder Übernahme des Zwischenformlings von der Zwischenblasform in die Endblasform erlaubt. Wenn sowohl Kunststoffhohlkörper mit rotationssymmetrischem Querschnitt als auch solche mit hiervon abweichendem Querschnitt produziert werden sollen, ist der Hersteller daher genötigt, für jeden dieser Hohlkörpertypen wenigstens eine eigene Extrusionsblasmaschine anzuschaffen und zu betreiben. Je nach Verteilung der Aufträge auf die beiden Hohlkörpertypen sind dann mehr oder minder lange Stillstandszeiten der einen oder der anderen Blasmaschine unvermeidlich.

Der Erfindung liegt deshalb die Aufgabe zugrunde, eine Extrusionsblasmaschine zu schaffen, die mit geringem Aufwand von der Herstellung von Hohlkörpern des einen Typs auf diejenige des anderen Typs umrüstbar ist, und umgekehrt.

Diese Aufgabe ist erfindungsgemäß dadurch gelöst, daß der Extruder, einschließlich seines Antriebes und aller Versorgungsanschlüsse, mit mindestens einer der beiden Blaspinolen stellungsvertauschbar montiert ist, so daß bei vertauschter Stellung der Extruder den vorherigen Platz einer der Blaspinolen und diese den vorherigen Platz des Extruders einnimmt.

Konstruktiv läßt sich dieser Vorschlag am einfachsten dadurch verwirklichen, daß der Maschinenrahmen mit identischen Befestigungsmitteln sowie Paßstiften oder anderen Zentriervorrichtungen einerseits für den Extruder, andererseits für mindestens eine der Blaspinolen ausgerüstet ist.

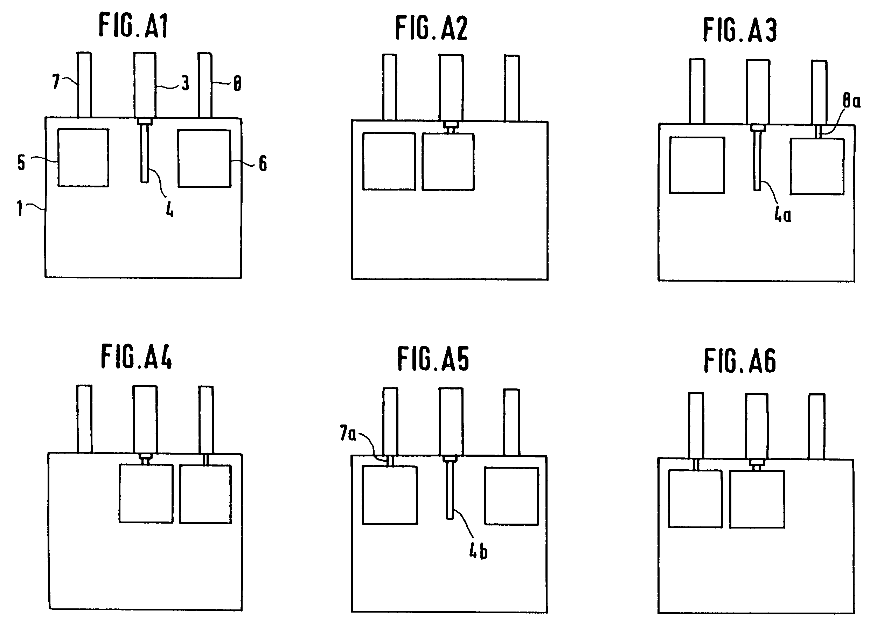

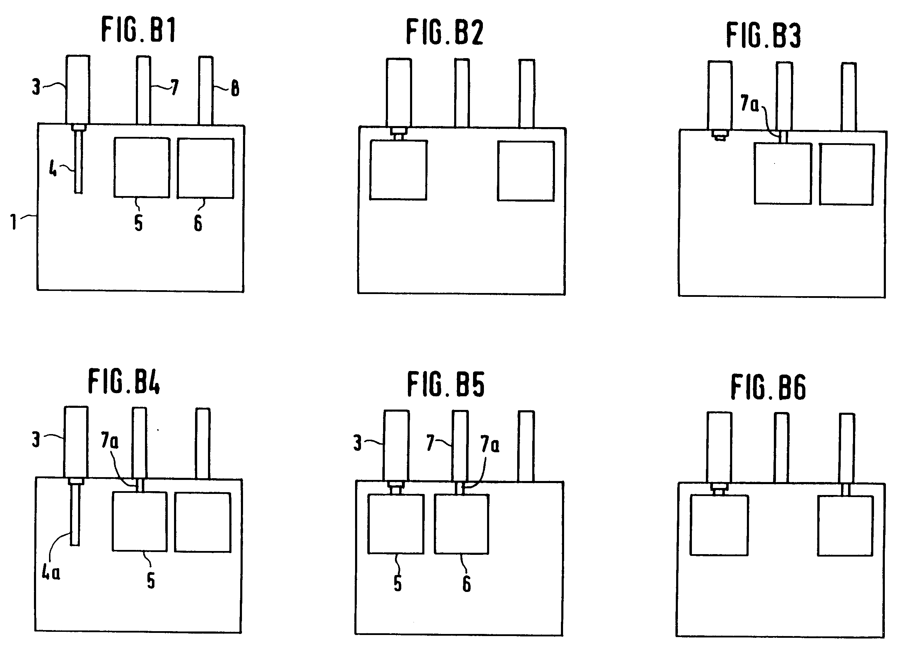

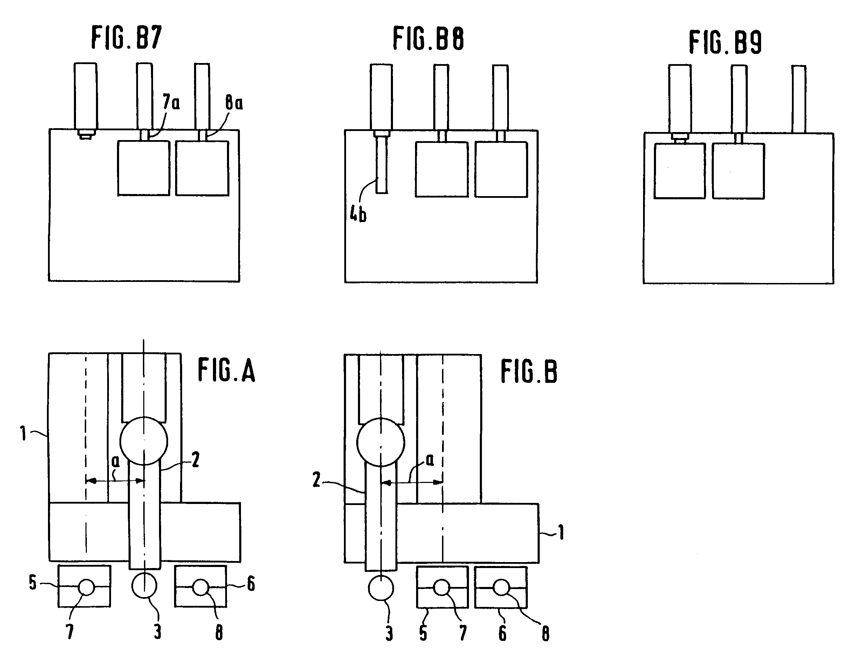

In der Zeichnung ist eine Extrusionsblasmaschine nach der Erfindung schematisch vereinfacht dargestellt. Es zeigt:
- Fig. A:: eine Aufsicht auf die Blasmaschine in der Ausführungsform zur Herstellung von Rundflaschen
- Fig. B:: eine Aufsicht auf die gleiche Blasmaschine, umgerüstet zur Herstellung von Flachflaschen
- Fig. A1 bis A6:: Stirnansichten der Maschine nach A in den in den wichtigsten Maschinentakten und
- Fig. B1 bis B9:: Stirnansichten der Maschine nach B in den wichtigsten Maschinentakten.

In allen Figuren sind gleiche Teile mit gleichen Bezugszeichen versehen. Die in den Fig. A und B in der Aufsicht schematisch vereinfacht dargestellte Extrusionsblasmaschine umfaßt einen Maschinenrahmen 1, auf dem ein Extruder 2 beliebiger Bauart montiert ist, beispielsweise ein Schneckenextruder oder ein Schubschneckenextruder. Der Extruder 2 endet in einem nur schematisch angedeuteten Düsenkopf 3, der sich vor der Stirnfläche des Maschinenrahmens 1 befindet.

In Fig. A befinden sich beidseits des Düsenkopfes 3 übliche, geteilte Blasformen 5 und 6, deren Teilungsebene in einer Vertikalebene liegt, die auch die Achse des Düsenkopfes 3 enthält. Die Schließeinheiten zum Öffnen und Schließen der Blasformen 5 und 6 sind weggelassen, ebenso die Antriebe, mittels derer die Blasformen 5 und 6 horizontal um das Maß "a" hin- und herverschiebbar sind. Oberhalb jeder der Blasformen 5 und 6 ist jeweils eine ihr zugeordnete übliche Blaspinole 7 bzw. 8 angeordnet. In Fig. B sind im Vergleich zur Fig. A der Extruder 2 einschließlich seines Düsenkopfes 3 und die zu der Blasform 5 gehörige Blaspinole 7 stellungsvertauscht um das Maß "a" angeordnet.

In der Ausführungsform gemäß Fig. A dient die Extrusionsblasmaschine zur Herstellung von Rundflaschen. Die einzelnen Schritte sind in den Fig. A1 bis A6 als Ansichten der Stirnseite der Blasformmaschine wiedergegeben und werden wie folgt erläutert:
Fig. A1: Die beiden Blasformen 5 und 6 sind identisch ausgebildet und stehen geöffnet links und rechts von dem Düsenkopf 3, der einen Schlauch 4 der benötigten Länge extrudiert hat. Die Blaspinolen 7 und 8 stehen oben.
Fig. A2: Die Blasform 6 ist unter den Düsenkopf 3 gefahren, schließt dort und übernimmt damit den wie üblich etwa gleichzeitig abgetrennten Schlauchabschnitt.
Fig. A3: Die rechte Blasform 6 ist in ihre Ausgangsstellung zurückgefahren, die rechte Blaspinole 8 hat ihre Blasdüse 8a auf die Mündung aufgesetzt und formt damit das Schlauchstück in die gewünschte Rundflaschenform. Währenddessen hat der Düsenkopf 3 einen weiteren Schlauchabschnitt 4a extrudiert.
Fig. A4: Die linke Blasform 5 ist unter den Düsenkopf 3 gefahren und übernimmt von dort das neue Schlauchstück.
Fig. A5: Die linke Blasform 5 ist in ihre Ausgangsstellung zurückgefahren, die Düse 7a der Blaspinole 7 befindet sich in ihrer abgesenkten Stellung.
Fig. A6: Die Blasmaschine hat einen vollständigen Zyklus durchfahren. Es beginnt ein neuer Zyklus bei Fig. A2, bei dem das in der Stellung gemäß Fig. A5 extrudierte, nächste Schlauchstück 4b in die rechte Blasform 6 übernommen wird.

In der Ausführungsform gemäß Fig. B dient die Extrusionsblasmaschine zur Herstellung von Hohlkörpern mit vom Kreisquerschnitt abweichendem Querschnitt, also z.B. Flachflaschen. Die einzelnen Schritte sind in den Fig. B1 bis B9 wiedergegeben und werden wie folgt erläutert:
Fig. B1: Anders als im Fall A haben die Blasformen 5 und 6 unterschiedliche Aufgaben und daher unterschiedliche Formhohlräume. Die Blasform 5 ist eine Vorblasform, deren Formhohlraum zumindest näherungsweise kreisförmigen Querschnitt hat. Die Blasform 6 ist eine Endblasform, deren Formhohlraum das Negativ der herzustellenden Flachflasche ist. Beide Blasformen 5 und 6 stehen in geöffneter Stellung bereit, die jeweiligen, zugeordneten Blaspinolen 7 bzw. 8 befinden sich in ihrer oberen oder eingefahrenen Stellung. Der Blaskopf 3 hat ein erstes Schlauchstück 4 extrudiert.
Fig. B2: Die Vorblasform 5 ist nach links unter den Blaskopf 3 gefahren und übernimmt den Schlauchabschnitt 4.
Fig. B3: Die Vorblasform 5 ist in ihre Ausgangsstellung zurückgefahren, die abgesenkte Düse 7a der Blaspinole 7 bläst den Zwischenformling.
Fig. B4: Der Düsenkopf 3 hat den nächsten Schlauchabschnitt 4a extrudiert. Die Vorblasform 5 hat geöffnet, der Zwischenformling hängt an der Düse 7a der Blaspinole 7. Die Endblasform 8 ist nach wie vor geöffnet.
Fig. B5: Die Vorblasform 5 und die Endblasform 6 sind etwa zeitgleich nach links verfahren, die Vorblasform 5 unter den Düsenkopf 3, die Endblasform 6 unter die Blaspinole 7. Nach dem Schließen der Endblasform 6, ggf. einem anschließenden kurzen Blasvorgang, fährt die Blasdüse 7a nach oben.
Fig. B6: Die Endblasform 6 ist in ihre Ausgangsstellung zurückgefahren, die Blasdüse 8a der Blaspinole 8 befindet sich in ihrer abgesenkten Stellung und formt den Zwischenformling in die fertige Flachflasche um. Die Zwischenblasform 5 übernimmt den neuen Schlauchabschnitt von dem Düsenkopf 3.
Fig. B7: Die Zwischenblasform 5 ist in ihre Ausgangsstellung zurückgefahren, die zugehörige Blasdüse 7a befindet sich in ihrer abgesenkten Stellung. In beiden Blasformen 5 und 6 wird der jeweilige Blasdruck aufgebaut bzw. aufrechterhalten.
Fig. B8: Beide Blasformen 5 und 6 sind geöffnet, der Zwischenformling und die fertige Flachflasche hängen an den jeweiligen Blasdüsen 7a bzw. 8a. Währenddessen hat der Düsenkopf 3 einen weiteren Schlauchabschnitt 4b ausgeschoben.
Fig. B9: Nach dem Abstreifen der fertigen Flachflasche ist die Blasdüse 8a nach oben gefahren, die Zwischenblasform 5 zur Übernahme des neuen Schlauchstückes 4b unter den Düsenkopf 3 gefahren und die Endblasform 6 unter die Blaspinole 7 gefahren, um den an deren Blasdüse 7a hängenden Zwischenformling zu übernehmen. Somit ist ein vollständiger Zyklus abgeschlossen. Der nächste Zyklus beginnt mit der in Fig. B5 gezeigten Stellung.

## Patentansprüche

1. Extrusionsblasmaschine zur Herstellung von Kunststoffhohlkörpern, mit einem Maschinenrahmen (1) der einen horizontal angeordneten Extruder (2) trägt, über dessen Düsenkopf (3) ein Schlauch (4) an einer Stirnseite des Maschinenrahmens vertikal extrudierbar ist, sowie mit zwei an dieser Stirnseite des Maschinenrahmens symmetrisch beidseits des Düsenkopfes (3) angeordneten geteilten Blasformen (5, 6), deren jede eine Schließeinheit, eine Antriebseinheit zur horizontalen Verschiebung unter den Düsenkopf zur Übernahme des extrudierten Schlauchstücks und je eine oberhalb der zugeordneten Blasform (5 bzw. 6) am Maschinenrahmen (3) befestigte Blaspinole (7 bzw. 8) aufweist), **dadurch gekennzeichnet**, daß der Extruder (2), einschließlich seines Antriebes und aller Versorgungsanschlüsse, mit mindestens einer der beiden Blaspinolen (7 oder 8) stellungsvertauschbar montiert ist, so daß bei vertauschter Stellung der Extruder den vorherigen Platz der betreffenden Blaspinole und diese den vorherigen Platz des Extruders einnimmt.

## Claims

1. An extrusion blow moulding machine for the production of plastics hollow bodies, comprising a machine frame (1) carrying a horizontally arranged extruder (2), by way of the nozzle head (3) of which a tube (4) can he vertically extruded at one end of the machine frame, and two divided blow moulding moulds (5, 6) which are arranged at said end of the machine frame symmetrically on both sides of the nozzle head (3) and each of which has a closing unit, a drive unit for horizontal displacement beneath the nozzle head for receiving the extruded tube portion and a respective blowing sleeve (7 and 8) which is fixed on the machine frame (3) above the associated blow moulding mould (5 and 6), characterised in that the extruder (2) including its drive and all supply connections is mounted interchangeably in position with at least one of the two blowing sleeves (7 or 8) so that in the interchanged position the extruded occupies the previous place of the blowing sleeve in question and the latter occupies the previous place of the extruder.

## Revendications

1. Machine de soufflage-extrusion pour la fabrication de corps creux en matière plastique, comprenant un châssis de machine (1) qui porte une extrudeuse (2) disposée horizontalement, au moyen de la tête d'injection (3) de laquelle on peut extruder verticalement un tuyau (4) sur un côté frontal du châssis de machine, et comprenant deux moules de soufflage subdivisés (5, 6) agencés symétriquement des deux côtés de la tête d'injection (3) sur ce côté frontal du châssis de machine, chaque moule de soufflage comportant une unité de fermeture, une unité d'entraînement pour la translation horizontale sous la tête d'injection afin de recevoir le tronçon de tuyau extrudé et une douille de soufflage (7 ; 8) fixée au-dessus du moule de soufflage associé (5 ; 6) sur le châssis de machine (3), caractérisée en ce que l'extrudeuse (2), y compris son entraînement et tous les raccords d'alimentation, est montée de manière à pouvoir être échangée en position avec l'une au moins des deux douilles de soufflage (7 ou 8), de sorte que lors d'un échange de position l'extrudeuse occupe la place précédente de la douille de soufflage concernée, et celle-ci occupe la place précédente de l'extrudeuse.
